# FASCICULE DE BREVET EUROPEEN

(11) **EP 2 508 017 B1**
(45) Date de publication et mention de la délivrance du brevet: **17.06.2015**
(21) Numéro de dépôt: 10773363.6
(22) Date de dépôt: 09.11.2010
(51) Int. Cl.: H04L 12/911, H04W 36/00, H04L 12/919, H04L 29/06

(54) **PROCEDE POUR ASSURER LA CONTINUITE DE LA GESTION DE SESSIONS DE COMMUNICATIONS OPEREES A PARTIR D'UN TERMINAL MOBILE DE QUATRIEME GENERATION**
VERFAHREN ZUR SICHERSTELLUNG VON KONTINUITÄT WÄHREND DER VERWALTUNG VON KOMMUNIKATIONSSITZUNGEN VON EINEM MOBILEN ENDGERÄT DER VIERTEN GENERATION AUS
METHOD FOR ENSURING CONTINUITY DURING THE MANAGEMENT OF COMMUNICATION SESSIONS OPERATED FROM A FOURTH-GENERATION MOBILE TERMINAL

(30) Priorité: 01.12.2009 FR 0905791
(43) Date de publication de la demande: 10.10.2012
(73) Titulaire: THALES, 92200 Neuilly-sur-Seine (FR)
(72) Inventeur: MATHIEU, Christophe, F-92160 Antony (FR); MARTINEZ, Natael, F-94270 Le Kremlin Bicetre (FR)
(74) Mandataire: Labatte, Laurent
(86) Numéro de dépôt international: PCT/EP2010/067121
(87) Numéro de publication internationale: WO 2011/067077

(56) Documents cités:
- WO-A2-2008/033381
- FARAHBAKHSH R ET AL: "Using context transfer mechanisms to Improve Mobile IMS-IPv6 Handover Latency and QoS provisioning", INTERNET MULTIMEDIA SERVICES ARCHITECTURE AND APPLICATIONS, 2008. IMSAA 2008. 2ND INTERNATIONAL CONFERENCE ON, IEEE, PISCATAWAY, NJ, USA, 10 décembre 2008 (2008-12-10), pages 1-6, XP031408572, ISBN: 978-1-4244-2684-3
- PACK S ET AL: "SAMP: Scalable Application-Layer Mobility Protocol", IEEE COMMUNICATIONS MAGAZINE, IEEE SERVICE CENTER, PISCATAWAY, US LNKD- DOI:10.1109/MCOM.2006.1668425, vol. 44, no. 6, 1 juin 2006 (2006-06-01), pages 86-92, XP001546257, ISSN: 0163-6804
- KIM LYNGGAARD LARSEN ET AL: "Optimized Macro Mobility within the 3GPP IP Multimedia Subsystem", COMPUTING IN THE GLOBAL INFORMATION TECHNOLOGY, 2006. ICCGI 2006. INTE RNATIONAL MULTI-CONFERENCE ON BUCHAREST, ROMANIA 01-03 AUG. 2006, PISCATAWAY, NJ, USA,IEEE, 1 juillet 2006 (2006-07-01), pages 82-82, XP031056650, ISBN: 978-0-7695-2629-4
- SHUN-REN YANG ET AL: "SIP Multicast-Based Mobile Quality-of-Service Support over Heterogeneous IP Multimedia Subsystems", IEEE TRANSACTIONS ON MOBILE COMPUTING, IEEE SERVICE CENTER, LOS ALAMITOS, CA, US LNKD- DOI:10.1109/TMC.2008.53, vol. 7, no. 11, 1 novembre 2008 (2008-11-01), pages 1297-1310, XP011226144, ISSN: 1536-1233
- AKHTAR N ET AL: "Hybrid multilayer mobility management with AAA context transfer capabilities for all-IP networks", IEEE WIRELESS COMMUNICATIONS, IEEE SERVICE CENTER, PISCATAWAY, NJ, US LNKD- DOI:10.1109/MWC.2004.1325894, vol. 11, no. 4, 1 août 2004 (2004-08-01), pages 76-88, XP011117205, ISSN: 1536-1284
- BANERJEE N ET AL: "Analysis of SIP-based mobility management in 4G wireless networks", COMPUTER COMMUNICATIONS, ELSEVIER SCIENCE PUBLISHERS BV, AMSTERDAM, NL LNKD- DOI:10.1016/J.COMCOM.2003.10.009, vol. 27, no. 8, 1 mai 2004 (2004-05-01), pages 697-707, XP004501200, ISSN: 0140-3664

## Description

La présente invention concerne un procédé pour assurer la continuité de la gestion de sessions de communications opérées à partir d'un terminal mobile de quatrième génération. Elle s'applique notamment aux réseaux WiMAX ou LTE (« Long Term Evolution ») pour permettre la continuité d'une session de données et de signalisation d'applications orientées connexion et utilisant en particulier le protocole SIP (« Session Initiation Protocol »), par exemple VoIP, lors des déplacements de terminaux mobiles.

Les réseaux informatiques utilisés par les terminaux mobiles de quatrième génération (4G) comprennent des sous-réseaux radio, parfois désignés par le sigle anglo-saxon RAN pour « Radio Access Network », lesquels sont raccordés à un réseau d'interconnexion, appelé aussi CSN (« Connectivity Service Network »), le CSN pouvant être reliés à Internet. Un terminal mobile de quatrième génération est identifié par une adresse IP (« Internet Protocol ») qui lui permet de recevoir et d'émettre des données à travers l'ensemble du réseau informatique. Le terminal mobile est sous la couverture d'une station antennaire, appelée aussi station de base. Un RAN est formé d'un ensemble de stations de base dont les couvertures se complètent pour couvrir un territoire. Entre le terminal mobile et la station de base, les données sont transmises sous la forme d'ondes radioélectriques puis la station de base transmet les données, généralement via des câbles ou des fibres optiques, à une passerelle faisant interface entre un RAN et un CSN. En règle générale, plusieurs stations de base sont contrôlées par une même passerelle. Une telle passerelle remplit plusieurs rôles, notamment le filtrage de paquets, la gestion de la qualité de service, l'authentification des d'utilisateurs, le contrôle des stations de base. Par la suite, par souci de simplification, le terme de passerelle ASN-GW (« Access Service Network Gateway ») sera employé en référence aux passerelles présentes sur les réseaux WiMax ; ce terme ne doit toutefois pas être interprété de manière limitative, l'invention pouvant s'appliquer à tous types de réseaux de quatrième génération.

Lorsque le terminal mobile se déplace et sort de la zone couverte par une première station de base sous la couverture de laquelle il était situé, les communications sont assurées par une deuxième station de base dont la couverture est adjacente à la première. Si la deuxième station de base est connectée à la même passerelle ASN-GW que la première station de base, on parle de micro-mobilité. Dans le cas où la deuxième station de base est connectée à une passerelle ASN-GW d'accès différente de la première passerelle ASN-GW, le terme de macro-mobilité est employé. La présente invention traite plus particulièrement de continuité de la gestion des communications dans le cadre de la macro-mobilité des terminaux mobiles.

La gestion des sessions de communications permet d'exécuter un protocole de négociation d'appel entre deux utilisateurs visant à s'assurer que ces deux utilisateurs ont les moyens de dialoguer ensemble avant l'établissement d'une communication (par exemple établir un encodeur/décodeur cohérents des deux cotés de la ligne). Cette gestion peut être effectuée grâce à un protocole fonctionnant sur une architecture client-serveur. Par exemple, le protocole SIP s'appuie sur une coopération entre un module logiciel client installé sur un terminal et un serveur SIP présent dans le CSN.
Un document FARAHBAKHSH R et Al : "Using context transfer mechanisms to improve mobile IMS-IPv6 handover latency and QoS provisioning" INTERNET MULTIMEDIA SERVICES ARCHITECTURE AND APPLICATIONS, 2008. IMSAA 2008. 2nd INTERNATIONAL CONFERENCE ON, IEE, PISCATAWAY, NJ, USA, 10 décembre 2008, pages 1-6, divulgue un serveur de gestion de sessions. Un autre document PACK et AI : « SAMP : Scalable Application-Layer Mobility » IEEE COMMUNICATIONS MAGAZINE, IEEE SERVICE CENTER, PISCATAWAY, US LNKD-DOI: 10.1109/MCOM.2006.1668425, divulgue une méthode permettant de changer de serveur de gestion de session.

Un but de l'invention est de proposer une méthode pour assurer la continuité de la gestion d'une session de communications établie, au niveau des couches applicatives, sur un réseau de terminaux mobiles de quatrième génération. A cet effet, l'invention a pour objet un procédé pour assurer la continuité de la gestion de sessions de communications opérées à partir d'un terminal mobile (130) de quatrième génération communiquant sur un réseau IP, ledit réseau comprenant au moins un réseau radio (110) pourvu de plusieurs stations de base (111) avec lesquelles ledit terminal (130) est apte à communiquer, ledit réseau radio (110) étant relié par des passerelles d'accès (113, 113b, 113c) à un réseau d'interconnexion (120) pourvu de serveurs applicatifs (150a, 150b, 150c) de gestion de sessions de communications, les serveurs de gestion de sessions de communication étant des serveurs SIP, les sessions d'un terminal mobile (130) étant gérées par l'un desdits serveurs (150a, 150b, 150c), lesdits serveurs applicatifs (150a, 150b, 150c) comprennent au moins deux adresses IP, une première adresse, identique pour tous les serveurs (150a, 150b, 150c), étant utilisée pour accéder aux dits serveurs depuis le terminal mobile (130), une deuxième adresse IP étant utilisée pour l'adressage des serveurs (150a, 150b, 150c) au sein du réseau d'interconnexion (120) ; ledit procédé étant caractérisé en ce qu'il comporte au moins les étapes suivantes :
- lors du déplacement du terminal mobile (130) entraînant un changement de passerelle d'accès, transmettre (303) un message d'alerte à un nouveau serveur de gestion de sessions de communications (150b), ledit message d'alerte est transmis par la nouvelle passerelle (113b) en charge du terminal mobile (130) à un serveur SIP (150b) le plus proche de ladite nouvelle passerelle (113b) ;
- ledit nouveau serveur de gestion (150b) émet une requête d'interrogation (305) destinée à une adresse multicast à laquelle sont abonnés les serveurs SIP (150a, 150c) dudit réseau d'interconnexion (120) autres que ledit nouveau serveur ; ledit serveur (150a) qui gérait les sessions du terminal mobile avant son déplacement (130) reçoit ladite requête et transmet (307) le contexte d'appel dudit terminal (130) au dit nouveau serveur (150b);
- le nouveau serveur (150b) transmet (309) au terminal mobile (130) un message d'invitation accompagné de paramètres de connexion, de sorte que ledit terminal (130) puisse se connecter au dit nouveau serveur (150b).

Selon une mise en oeuvre du procédé selon l'invention, le message d'invitation émis par le nouveau serveur de gestion vers le terminal est de type « re-invite » ou « update ».

Selon une mise en oeuvre du procédé selon l'invention, les terminaux mobiles communiquent selon un mode de communication de type « appel de groupe ». Les applications de type « appel de groupe », désignées aussi par le terme anglo-saxon « push-to-talk », requièrent un volume important de données de signalisation. A ce titre, l'utilisation du procédé selon l'invention pour ce type d'applications est particulièrement avantageux.

L'invention a également pour objet un serveur de gestion de session mettant en oeuvre le procédé tel que décrit plus haut, ledit serveur comprenant au moins un gestionnaire de mobilité apte à récupérer le contexte d'appel du terminal mobile à partir d'un autre serveur de gestion.

L'invention a également pour objet un réseau de communications tel que décrit par les revendications.

Le procédé selon l'invention permet notamment d'éviter que la gestion de la session soit définitivement liée à un seul et même serveur de gestion.

Selon un mode de mise en oeuvre avantageux, les serveurs SIP sont distribués au plus près des stations de base radio, de sorte que les risques de rupture de service soient réduits. Pour certains réseaux, distribués par conception, le procédé selon l'invention permet d'obtenir une gestion fiable et continue des sessions de communications établies via des terminaux mobiles. Corollairement, le procédé selon l'invention permet de transformer un réseau dont la gestion des sessions initialement prévue est centralisée pour rendre cette gestion distribuée et ainsi rendre le réseau moins vulnérable à d'éventuels dysfonctionnements.

D'autres caractéristiques apparaîtront à la lecture de la description détaillée donnée à titre d'exemple et non limitative qui suit faite en regard de dessins annexés qui représentent :
- la figure 1a, un schéma illustrant un premier exemple de réseau 4G sur lequel peut être mis en oeuvre le procédé selon l'invention,
- la figure 1b, un schéma illustrant un deuxième exemple de réseau 4G sur lequel peut être mis en oeuvre le procédé selon l'invention,
- la figure 2, un schéma illustrant un exemple d'architecture fonctionnelle d'un serveur de gestion de sessions mettant en oeuvre le procédé selon l'invention,
- la figure 3, un diagramme d'état illustrant les étapes d'un procédé selon l'invention.

Dans un souci de clarté, les mêmes références dans des figures différentes désignent les mêmes objets.

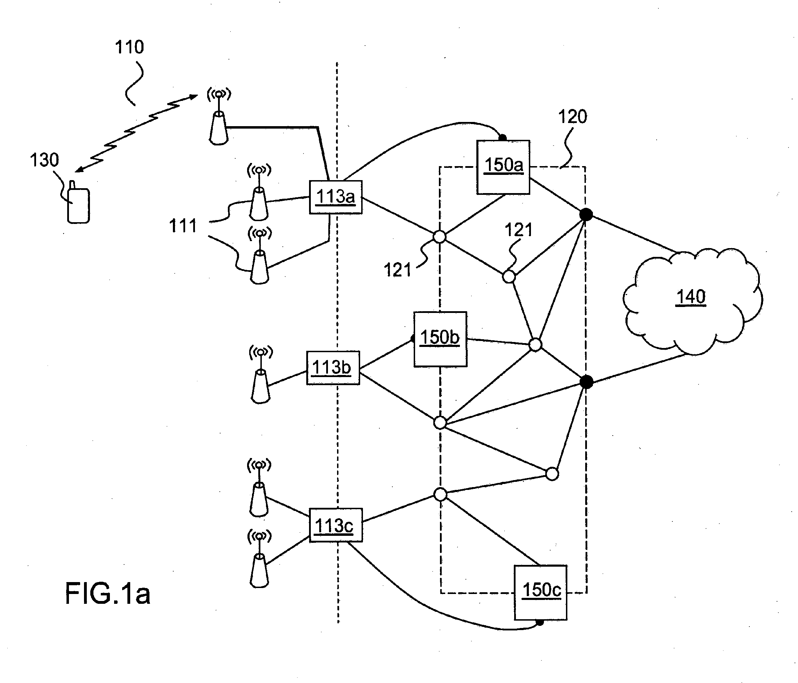

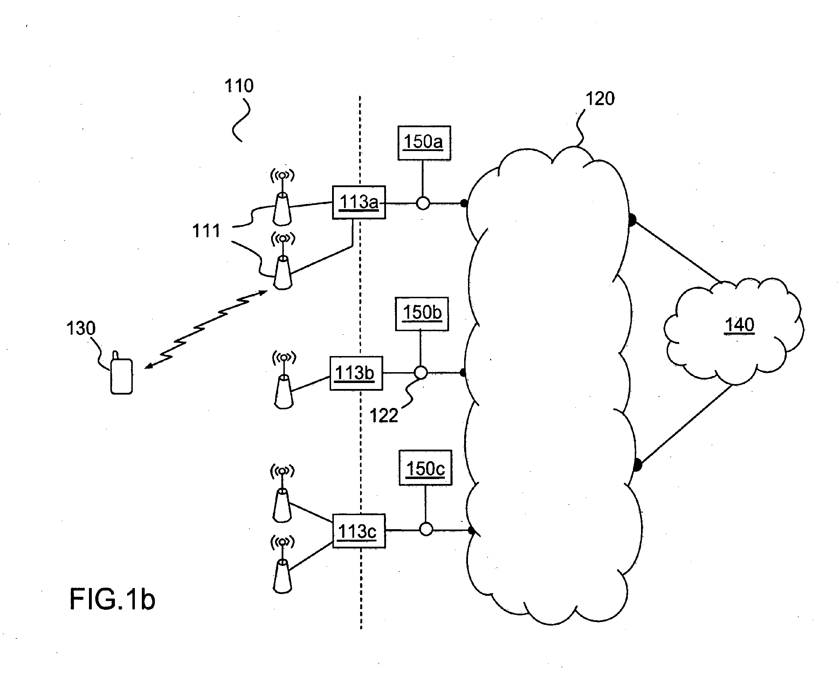

La figure 1 a est une vue présentant un premier exemple de réseau sur lequel le procédé selon l'invention peut être mis en oeuvre. Un réseau de communications 4G 100 comprend un réseau radio 110 appelé RAN par la suite, et un réseau d'interconnexion, ou CSN 120 formé, par exemple, de liens de communications câblés ou de liens radio par faisceau hertzien ou autres. Le CSN comprend des serveurs SIP 150a, 150b, 150c. Dans l'exemple, le CSN 120 est relié au réseau Internet 140 par l'intermédiaire de routeurs 121. Le RAN 110 comprend plusieurs stations de base radio 111 réparties pour couvrir un territoire. Ainsi, le réseau de communications 4G 100 permet à des terminaux mobiles présents sur ce territoire de communiquer avec d'autres terminaux connectés au réseau 4G 100. Un terminal mobile 130 est, par exemple, un téléphone, un ordinateur portable ou tout autre appareil nomade apte à communiquer via le réseau 4G 100.

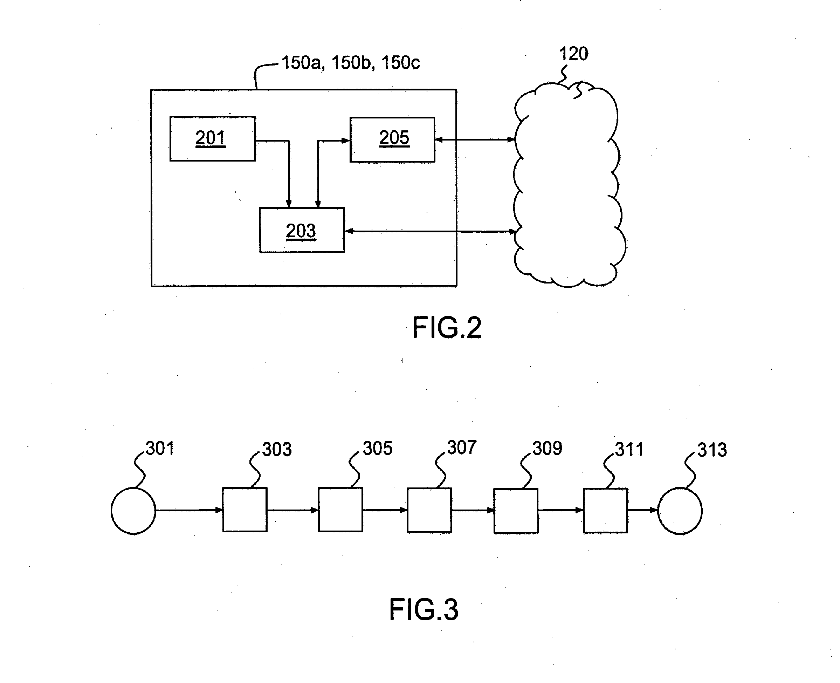

La figure 2 illustre, par un schéma, un exemple non limitatif d'architecture d'un serveur de gestion de sessions mettant en oeuvre le procédé selon l'invention. Dans l'exemple, le serveur de gestion 150a, 150b, 150c est un serveur SIP qui comprend un gestionnaire de mobilité 201, un contrôleur de sessions 203, et une base de données locale 205. Le gestionnaire de mobilité 201 permet d'alerter les autres serveurs SIP en cas de mobilité d'un terminal mobile géré par le serveur SIP 150a, 150b, 150c ; il permet également de récupérer les contextes d'appels en cas de prise en charge d'une nouvelle session de communications. Le contrôleur de sessions 203 permet d'assurer la gestion d'une session en cas de prise en charge d'une nouvelle session de communications. La base de données locale 205 est une base répliquée d'un serveur SIP à l'autre. Cette base de données 205 contient notamment les droits des utilisateurs. Chaque serveur SIP possède au moins deux adresses IP. Une première adresse IP, vue des terminaux mobiles, est identique pour tous les serveurs SIP et une seconde adresse IP est utilisée pour identifier chaque serveur SIP au sein du CSN 120. Le fait que la première adresse IP soit identique pour tous les serveurs SIP permet au terminal mobile de ne pas devoir changer, dans sa configuration, l'adresse du serveur SIP auprès duquel il est enregistré, un tel changement étant d'ailleurs impossible pour le protocole SIP. Du point de vue du terminal mobile, le changement de serveur SI P est donc transparent.

La figure 3 présente un diagramme d'état illustrant les étapes d'un procédé selon l'invention. Les étapes sont décrites en relation avec le réseau de la figure 1b et l'architecture du serveur présentée en figure 2.

Dans un état initial 301, un utilisateur abonné est enregistré auprès d'un serveur de gestion de session de communications, dans l'exemple un serveur SIP 150a. L'abonné, via un terminal mobile 130, a déjà établi une session de communication avec un autre abonné sur le réseau.

Au niveau de la couche liaison de données (par exemple Ethernet) et de la couche réseau (IP), des mécanismes sont mis en place pour assurer la continuité des communications opérées à partir du terminal mobile 130 en cas de macro-mobilité, par exemple via le procédé suivant : lors d'un changement de passerelle d'accès ASN-GW, la nouvelle passerelle d'accès 113b à laquelle le terminal 130 est affilié diffuse, sur le réseau d'interconnexion 120, un message comportant au moins l'adresse IP du terminal 130 et l'adresse de niveau 2 de ladite nouvelle passerelle d'accès 113b, les autres passerelles d'accès 113a, 113c du réseau enregistrant la correspondance entre ladite adresse IP et ladite adresse de niveau 2 de la nouvelle passerelle d'accès 113b.

Ce mécanisme est cependant insuffisant pour garantir que les services de gestion des sessions de communication continuent à fonctionner lors d'une macro-mobilité 320 du terminal mobile 130 de l'abonné. Tant que l'abonné demeure dans la zone couverte par la station de base initiale ayant permis l'initialisation d'une session, les risques de rupture du service de gestion de la session demeurent limités car le serveur SIP 150a gérant les sessions de communications de l'abonné est, a priori, proche de la passerelle d'accès 113a employée. Mais, lorsque le terminal 130 s'éloigne de sa base initiale, les risques que le serveur SIP 150a ne soit plus accessible depuis la nouvelle passerelle d'accès 113b augmentent.

Lorsque le terminal mobile 130 se déplace jusqu'au point de devoir changer de passerelle d'accès, la nouvelle passerelle d'accès 113b transmet, 303, un message d'alerte de mobilité à un serveur SIP 150b, généralement le plus proche de la nouvelle passerelle d'accès 113b. Dans l'exemple, le message de niveau 2 diffusé à travers le réseau d'interconnexion CSN 120 par la nouvelle passerelle d'accès 113b en charge du terminal mobile 130, est réutilisé ; ce message est considéré comme un message d'alerte de mobilité pour les serveurs SIP ; à ce titre, il est reçu par le gestionnaire de mobilité 201 du serveur SIP 150b.

Selon un mode de réalisation illustré à la figure 1b, à chaque serveur SIP 150a, 150b, 150c correspond une passerelle d'accès 113a, 113b, 113c. Aussi, le serveur SIP 150b est connecté sur le même commutateur ou routeur de site 122 que la nouvelle passerelle d'accès 113b, ledit commutateur ou routeur étant configuré pour rediriger le message d'alerte diffusé par la nouvelle passerelle 113b directement vers le serveur SI P 150b, lequel serveur 150b alerte, à son tour, les autres serveurs SI P 150a, 150c, via un autre message.

Le contrôleur de sessions du nouveau serveur SIP 150b en charge du terminal mobile 130 émet, 305, une requête d'interrogation destinée à une adresse multicast à laquelle sont abonnés les serveurs SIP 150a, 150b, 150c du CSN 120 de manière à déterminer lequel des serveurs SIP était en charge de la gestion de la session avant l'événement de macro-mobilité. Une fois que le serveur SIP 150a qui gérait la session avant l'événement de macro-mobilité reçoit cette requête, il transmet 307, par exemple via son gestionnaire de mobilité 201, au nouveau serveur SIP 150b en charge de la session le contexte d'appel lié aux sessions de communications en cours sur le terminal mobile de l'abonné. Ce contexte d'appel est un ensemble de paramètres comprenant notamment les identifiants de session et leurs caractéristiques telles que, par exemple, la bande passante octroyée, la qualité de service requise ; le contexte d'appel comprend également, lorsque la nature des communications l'exige, des clés d'authentification utilisées par la station de base. Selon un mode de mise en oeuvre du procédé selon l'invention, le contrôleur de sessions récupère, à partir de la base de données locale, les données liées à l'abonné du terminal mobile 130, par exemple les droits qui lui sont attribués. Ainsi, le contrôleur de session du nouveau serveur SIP dispose à la fois des données utilisateur et du contexte d'appel.

Le contrôleur de sessions émet ensuite, 309, un message d'invitation « re-INVITE » au client SIP exécuté par le terminal mobile de l'abonné. Le message d'invitation peut, selon une autre mise en oeuvre du procédé selon l'invention, être un message de type « update ». Le message d'invitation comprend les nouveaux paramètres de connexion pour l'appel en cours, ces paramètres comprenant notamment l'adresse IP du serveur SIP et les ports logiques auxquels le terminal mobile doit se connecter auprès du serveur SIP pour faire transiter les flux de données et de signalisation, par exemple les flux de type RTP (« Rèal-time Protocol ») et RTCP (« Real-time Control Protocol »). Ces paramètres peuvent être transmis sous la forme de messages au format SDP (« Session Description Protocol »).

Le terminal mobile 130 de l'abonné reçoit ces paramètres de connexion et modifie en conséquence, 311, sa configuration de manière à communiquer avec le contrôleur de sessions du nouveau serveur SIP.

A l'issue de l'exécution du procédé selon l'invention, 313, l'abonné est connecté à un nouveau serveur SIP qui assure la continuité de la gestion des sessions créées pour le terminal mobile 130.

Un avantage du procédé selon l'invention est qu'il ne nécessite aucune modification des clients SIP, autrement dit, aucune intervention sur les terminaux mobiles.

## Revendications

1. Procédé pour assurer la continuité de la gestion de sessions de communications opérées à partir d'un terminal mobile (130) de quatrième génération communiquant sur un réseau IP, ledit réseau comprenant au moins un réseau radio (110) pourvu de plusieurs stations de base (111) avec lesquelles ledit terminal (130) est apte à communiquer, ledit réseau radio (110) étant relié par des passerelles d'accès (113, 113b, 113c) à un réseau d'interconnexion (120) pourvu de serveurs applicatifs (150a, 150b, 150c) de gestion de sessions de communications, les serveurs de gestion de sessions de communication étant des serveurs SIP, les sessions d'un terminal mobile (130) étant gérées par l'un desdits serveurs (150a, 150b, 150c), lesdits serveurs applicatifs (150a, 150b, 150c) comprennent au moins deux adresses IP, une première adresse, identique pour tous les serveurs (150a, 150b, 150c), étant utilisée pour accéder aux dits serveurs depuis le terminal mobile (130), une deuxième adresse IP étant utilisée pour l'adressage des serveurs (150a, 150b, 150c) au sein du réseau d'interconnexion (120) ; ledit procédé étant **caractérisé en ce qu'**il comporte au moins les étapes suivantes :
• lors du déplacement du terminal mobile (130) entraînant un changement de passerelle d'accès, transmettre (303) un message d'alerte à un nouveau serveur de gestion de sessions de communications (150b), ledit message d'alerte est transmis par la nouvelle passerelle (113b) en charge du terminal mobile (130) à un serveur SIP (150b) le plus proche de ladite nouvelle passerelle (113b);
• ledit nouveau serveur de gestion (150b) émet une requête d'interrogation (305) destinée à une adresse multicast à laquelle sont abonnés les serveurs SIP (150a, 150c) dudit réseau d'interconnexion (120) autres que ledit nouveau serveur ; ledit serveur (150a) qui gérait les sessions du terminal mobile avant son déplacement (130) reçoit ladite requête et transmet (307) le contexte d'appel dudit terminal (130) au dit nouveau serveur (150b);
• le nouveau serveur (150b) transmet (309) au terminal mobile (130) un message d'invitation accompagné de paramètres de connexion, de sorte que ledit terminal (130) puisse se connecter au dit nouveau serveur (150b).

2. Procédé selon la revendication 1, **caractérisé en ce que** le message d'invitation émis par le nouveau serveur de gestion (150b) vers le terminal (130) est de type « re-invite » ou « update ».

3. Procédé selon l'une quelconque des revendications 1 ou 2, **caractérisé en ce que** les terminaux mobiles communiquent selon un mode de communication de type « appel de groupe ».

4. Serveur de gestion de session mettant en oeuvre le procédé selon l'une des revendications 1 à 3, ledit serveur (150a) comprenant au moins un gestionnaire de mobilité (201) apte à récupérer le contexte d'appel du terminal mobile (130) à partir d'un autre serveur de gestion (150a).

5. Réseau de communications IP comprenant au moins un réseau radio (110) pourvu de plusieurs stations de base (111) avec lesquelles des terminaux mobiles (130) de quatrième génération sont aptes à communiquer, ledit réseau radio (110) étant relié par des passerelles d'accès (113, 113b, 113c) à un réseau d'interconnexion (120) pourvu de serveurs applicatifs (150a, 150b, 150c) de gestion de sessions de communications, les serveurs de gestion de sessions de communication étant des serveurs SIP, les sessions d'un terminal mobile (130) étant gérées par l'un desdits serveurs, lesdits serveurs applicatifs (150a, 150b, 150c) étant pourvus d'au moins deux adresses IP, une première adresse, identique pour tous les serveurs, étant utilisée pour accéder aux dits serveurs (150a, 150b, 150c) depuis les terminaux mobiles, une deuxième adresse IP étant utilisée pour l'adressage interne au réseau d'interconnexion (120), ledit réseau étant **caractérisé en ce que** :
• lors du déplacement du terminal mobile (130) entraînant un changement de passerelle d'accès, un message d'alerte est transmis (303) à un nouveau serveur de gestion de sessions de communications (150b), ledit message d'alerte étant transmis par la nouvelle passerelle (113b) en charge du terminal mobile (130) à un serveur SIP (150b) le plus proche de ladite nouvelle passerelle (113b) ;
• ledit nouveau serveur de gestion (150b) émet une requête d'interrogation (305) destinée à une adresse multicast à laquelle sont abonnés les serveurs SIP (150a, 150c) dudit réseau d'interconnexion (120) autres que ledit nouveau serveur ; ledit serveur (150a) qui gérait les sessions du terminal mobile avant son déplacement (130) recevant ladite requête et transmettant (307) le contexte d'appel dudit terminal (130) au dit nouveau serveur (150b);
• le nouveau serveur (150b) transmet (309) au terminal mobile (130) un message d'invitation accompagné de paramètres de connexion, de sorte que ledit terminal (130) puisse se connecter au dit nouveau serveur (150b).

6. Réseau selon la revendication 5, dans lequel chaque station de base (111) comporte un serveur (150a, 150b, 150c) de gestion de sessions de communications.

## Patentansprüche

1. Verfahren zum Gewährleisten von Kontinuität beim Verwalten von Kommunikationssitzungen, durchgeführt von einem mobilen Endgerät (130) der vierten Generation, das auf einem IP-Netzwerk kommuniziert, wobei das Netzwerk wenigstens ein Funknetz (110) umfasst, das mit mehreren Basisstationen (111) versehen ist, mit denen das Endgerät (130) kommunizieren kann, wobei das Funknetz (110) über Zugangs-Gateways (113, 113b, 113c) mit einem Verbindungsnetz (120) verbunden ist, das über Kommunikationssitzungsmanagement-Applikationsserver (150a, 150b, 150c) verfügt, wobei die Kommunikationssitzungsmanagement-Server SIP-Server sind, wobei die Sitzungen eines mobilen Endgeräts (130) von einem der Server (150a, 150b, 150c) verwaltet werden, wobei die Applikationssemer (150a, 150b, 150c) wenigstens zwei IP-Adressen umfassen, eine erste Adresse, die in allen Servern (150a, 150b, 150c) identisch ist und zum Zugreifen auf die Server von dem mobilen Endgerät (130) benutzt wird, eine zweite IP-Adresse, die zum Adressieren der Server (150a, 150b, 150c) in dem Verbindungsnetz (120) benutzt wird, wobei das Verfahren **dadurch gekennzeichnet ist, dass** es wenigstens die folgenden Schritte beinhaltet:
• Senden (303), wenn das mobile Endgerät (130) in Bewegung ist, was zu einer Änderung des Zugangs-Gateway führt, einer A1armierungsnachricht zu einem neuen Kommunikationssitzungsmanagement-Server (150b), wobei die Alarmierungsnachricht von dem das mobile Endgerät (130) steuernden neuen Gateway (113b) zu einem SIP-Server (150b) gesendet wird, der sich dem neuen Gateway (113b) am nächsten befindet;
• Emittieren, durch den neuen Server (150b), einer Abfrageanforderung (305), die für eine Multicast-Adresse bestimmt ist, bei der die SIP-Server (150a, 150c), außer dem neuen Server, des Verbindungsnetzes (120) abonniert sind, wobei der Server (150a), der die Sitzungen des mobilen Endgeräts vor seiner Bewegung (130) verwaltet, die Anforderung empfängt und den Rufkontext des Endgeräts (130) zu dem neuen Server (150b) sendet (307);
• wobei der neue Server (150b) eine Einladungsnachricht zu dem mobilen Endgerät (130) sendet (309), wobei die Nachricht von Zuschaltparametern begleitet ist, so dass sich das Endgerät (130) dem neuen Server (150b) zuschalten kann.

2. Verfahren nach Anspruch 1, **dadurch gekennzeichnet, dass** die von dem neuen Management-Server (150b) zu dem Endgerät (130) gesendete Einladungsnachricht vom "Neueinladungs"- oder vom "Update"-Typ ist.

3. Verfahren nach Anspruch 1 oder 2, **dadurch gekennzeichnet, dass** die mobilen Endgeräte gemäß einem "Gruppenanruf"-Kommunikationsmodus kommunizieren.

4. Sitzungsmanagement-Server, der das Verfahren nach einem der Ansprüche 1 bis 3 implementiert, wobei der Server (150a) wenigstens einen Mobilitätsmanager (201) umfasst, der den Rufkontext des mobilen Endgeräts (130) von einem anderen Management-Servers (150a) wiederherstellen kann.

5. IP-Kommunikationsnetzwerk, das wenigstens ein Funknetz (110) umfasst, das über mehrere Basisstationen (111) verfügt, mit denen mobile Endgeräte (130) der vierten Generation kommunizieren können, wobei das Funknetz (110) über Zugangs-Gateways (113, 113b, 113c) mit einem Verbindungsnetz (120) verbunden ist, das über Kommunikationssitzungsmanagement-Applikationsserver (150a, 150b, 150c) verfügt, wobei die Kommunikationssitzungsmanagement-Server SIP-Server sind, wobei die Sitzungen eines mobilen Endgeräts (130) von einem der Server verwaltet werden, wobei die Applikationsserver (150a, 150b, 150c) über wenigstens zwei IP-Adressen verfügen, eine erste Adresse, die in allen Servern identisch ist und zum Zugreifen auf die Server (150a, 150b, 150c) von den mobilen Endgeräten benutzt wird, eine zweite IP-Adresse, die zum internen Adressieren des Verbindungsnetzes (120) benutzt wird, wobei das Netzwerk **dadurch gekennzeichnet ist, dass**:
• wenn das mobile Endgerät (130) in Bewegung ist, was zu einer Änderung des Zugangs-Gateway führt, eine Alarmierungsnachricht zu einem neuen Kommunikationssitzungsmanagement-Server (150b) gesendet (303) wird, wobei die Alarmierungsnachricht von dem das mobile Endgerät (130) steuernden neuen Gateway (113b) zu einem SIP-Server (150b) gesendet wird, der sich dem neuen Gateway (113b) am nächsten befindet;
• der neue Management-Server (150b) eine Abfrageanforderung (305) sendet, die für eine Multicast-Adresse bestimmt ist, bei der die SIP-Server (150a, 150c) mit Ausnahme des neuen Servers des Verbindungsnetzes (120) abonniert sind, wobei der Server (150a), der die Sitzungen des mobilen Endgeräts (130) vor seiner Bewegung verwaltet, die Anforderung empfängt und den Anrufkontext des mobilen Endgeräts zu dem neuen Server (150b) sendet (307);
• der neue Server (150b) eine Einladungsnachricht zu dem mobilen Endgerät (130) sendet (309), wobei die Nachricht von Zuschaltparametern begleitet ist, so dass sich das Endgerät (130) dem neuen Server (150b) zuschalten kann.

6. Netzwerk nach Anspruch 5, wobei jede Basisstation (111) einen Kommunikationssitzungsmanagement-Server (150a, 150b, 150c) umfasst.

## Claims

1. A method for ensuring continuity when managing communication sessions operated from a fourth generation mobile terminal (130) communicating on an IP network, said network comprising at least one radio network (110) provided with a plurality of base stations (111) with which said terminal (130) is able to communicate, said radio network (110) being linked via access gateways (113, 113b, 113c) to an interconnection network (120) provided with communication session management application servers (150a, 150b, 150c), said communication session management servers being SIP servers, the sessions of a mobile terminal (130) being managed by one of said servers (150a, 150b, 150c), said application servers (150a, 150b, 150c) comprising at least two IP addresses, a first address, which is identical for all of said servers (150a, 150b, 150c), being used to access said servers from said mobile terminal (130), a second IP address being used to address said servers (150a, 150b, 150c) within said interconnection network (120), said method being **characterised in that** it comprises at least the following steps:
• transmitting (303), when said mobile terminal (130) moves, which results in a change of access gateway, an alert message to a new communication session management server (150b), said alert message being transmitted by said new gateway (113b) controlling said mobile terminal (130) to an SIP server (150b) that is closest to said new gateway (113b);
• transmitting, from said new server (150b), a polling request (305) intended for a multicast address to which said SIP servers (150a, 150c), other than said new server, of said interconnection network (120) are subscribed, said server (150a) that manages the sessions of said mobile terminal before it moves (130) receiving said request and transmitting (307) the call context of said terminal (130) to said new server (150b);
• transmitting (309), from said new server (150b), an invitation message to said mobile terminal (130), which message is accompanied by connection parameters, so that said terminal (130) can connect to said new server (150b).

2. The method according to claim 1, **characterised in that** said invitation message transmitted by said new management server (150b) towards said terminal (130) is of the "re-invite" or the "update" type.

3. The method according to claim 1 or 2, **characterised in that** said mobile terminals communicate according to a "group call" communication mode.

4. A session management server implementing the method according to any one of claims 1 to 3, said server (150a) comprising at least one mobility manager (201) able to recover the call context of said mobile terminal (130) from another management server (150a).

5. An IP communications network comprising at least one radio network (110) provided with a plurality of base stations (111) with which fourth generation mobile terminals (130) are able to communicate, said radio network (110) being connected via access gateways (113, 113b, 113c) to an interconnection network (120) provided with communication session management application servers (150a, 150b, 150c), said communication session management servers being SIP servers, the sessions of a mobile terminal (130) being managed by one of said servers, said application servers (150a, 150b, 150c) being provided with at least two IP addresses, a first address, which is identical for all of the servers, being used to access said servers (150a, 150b, 150c) from said mobile terminals, a second IP address being used for the internal addressing of said interconnection network (120), said network being **characterised in that**:
• when said mobile terminal (130) moves, which results in a change of access gateway, an alert message is transmitted (303) to a new communication sessions management server (150b), said alert message being transmitted by said new gateway (113b) controlling said mobile terminal (130) to an SIP server (150b) that is closest to said new gateway (113b);
• said new management server (150b) transmits a polling request (305) intended for a multicast address to which said SIP servers (150a, 150c), other than said new server, of said interconnection network (120) are subscribed, said server (150a) that manages the sessions of said mobile terminal (130) before it moves receiving said request and transmitting (307) the call context of said mobile terminal to said new server (150b);
• said new server (150b) transmits (309) an invitation message to said mobile terminal (130), which message is accompanied by connection parameters, so that said terminal (130) can connect to said new server (150b).

6. A network according to claim 5, wherein each base station (111) comprises a communication sessions management server (150a, 150b, 150c).
